# EUROPÄISCHE PATENTANMELDUNG

(11) **EP 2 950 379 A1**
(43) Veröffentlichungstag der Anmeldung: **02.12.2015**
(21) Anmeldenummer: 14170610.1
(22) Anmeldetag: 30.05.2014
(51) Int. Cl.: H01M 10/052, H01M 10/613, H01M 10/625, H01M 10/6569

(54) **Elektrischer Energiespeicher**

(71) Anmelder: Siemens Aktiengesellschaft, 80333 München (DE)
(72) Erfinder: Mörsch, Michael, 91054 Erlangen (DE); Danov, Vladimir, 91056 Erlangen (DE); Schröter, Andreas, 91336 Heroldsbach (DE)

(57) **Zusammenfassung**

Die Erfindung betrifft einen elektrischen Energiespeicher (1), umfassend ein Gehäuse (3), einen innerhalb des Gehäuses (3) angeordneten elektrischen Speicherblock (2), eine Kühlstruktur (4) und ein innerhalb des Gehäuses (3) befindliches und in thermischem Kontakt mit dem Speicherblock (2) stehendes erstes Kühlmedium (K1), wobei das erste Kühlmedium (K1) derart ausgebildet ist, dass ein Aggregatzustand des ersten Kühlmediums (K1) bei einer Wärmeaufnahme vom Speicherblock (2) bei einer vorgegebenen Grenztemperatur von einer Flüssigphase in eine Gasphase wechselt, das gasförmige erste Kühlmedium (K1) zur Kühlstruktur (4) strömt, das gasförmige erste Kühlmedium (K1) an der Kühlstruktur (4) kondensiert und das flüssige erste Kühlmedium (K1) zur Wärmeaufnahme von der Kühlstruktur (4) zum Speicherblock (2) zurück strömt.

Die Erfindung betrifft weiterhin ein Verfahren zur Kühlung von elektrischen Energiespeichern (1), ein Verfahren zur Herstellung eines elektrischen Energiespeichers (1) und eine Verwendung eines elektrischen Energiespeichers (1).

## Beschreibung

Die Erfindung betrifft einen elektrischen Energiespeicher und ein Verfahren zur Kühlung von elektrischen Energiespeichern.

Ferner betrifft die Erfindung ein Verfahren zur Herstellung eines elektrischen Energiespeichers und eine Verwendung eines elektrischen Energiespeichers.

Aus dem Stand der Technik sind elektrische Energiespeicher für mobile Anwendungen bekannt. Die Energiespeicher, beispielsweise Lithium-Ionen-Speicher oder als so genannte Superkondensatoranordnungen (englisch Supercapicitors) ausgebildete elektrochemische Kondensatoren, umfassen jeweils eine Mehrzahl von elektrochemischen Speichereinheiten, welche elektrisch parallel und/oder in Reihe geschaltet sind.

Die Speichereinheiten weisen eine maximale Betriebstemperatur und einen begrenzten Betriebstemperaturbereich auf. Die Betriebstemperatur bedingt zum einen eine Lebensdauer des Energiespeichers und zum anderen dessen Betriebssicherheit. Eine während des Betriebs beim Laden und Entladen entstehende Verlustleistung bewirkt eine Erwärmung der Speichereinheiten. Sind die Speichereinheiten zu Speicherblöcken zusammengefasst, wird die entstehende Verlustleistung durch axiale Flächen der Speicherblöcke abgeführt. Im Vergleich zur gesamten Oberfläche der Speicherblöcke ist diese Fläche sehr klein.

Um eine während eines Betriebs solcher Energiespeicher von den Speichereinheiten erzeugte Verlustwärme abzuführen, sind verschiedene Vorrichtungen und Verfahren zur Kühlung von Energiespeichern bekannt. Hierbei erfolgt die Kühlung als aktive oder passive Kühlung mit einem oder mehreren Kühlmedien. Auch ist es bekannt, dass die Energiespeicher und/oder die Speichereinheiten mit einer von einem Kühlfluid um- oder durchströmten Kühlstruktur gekoppelt sind.

Hierbei ist bekannt, dass entweder axiale Stirnseiten der Speichereinheiten thermisch mit als wassergekühlte oder luftgekühlte Kühlplatten ausgebildeten Kühlstrukturen gekoppelt sind. Zur Kühlung der Kühlstrukturen ist eine Luftkühlung vorgesehen, bei welcher eine Kühlleistung von einer Temperatur der Luft abhängt. Auch sind Flüssigkeitskühlungen der Kühlstrukturen mit Wasser, Öl oder anderen Flüssigkeiten bekannt, bei welchen die Kühlleistung nur bedingt von der Lufttemperatur abhängt.

Alternativ wird ein Gehäuse des Energiespeichers mit einem flüssigen Kühlmedium gefüllt, so dass eine so genannte konvektive Badkühlung realisiert wird.

Der Erfindung liegt die Aufgabe zugrunde, einen gegenüber dem Stand der Technik verbesserten elektrischen Energiespeicher, ein verbessertes Verfahren zur Kühlung eines elektrischen Energiespeichers, ein verbessertes Verfahren zur Herstellung eines elektrischen Energiespeichers und eine Verwendung eines elektrischen Energiespeichers anzugeben.

Hinsichtlich des elektrischen Energiespeichers wird die Aufgabe erfindungsgemäß durch die im Anspruch 1 und hinsichtlich des Verfahrens zur Kühlung eines elektrischen Energiespeichers durch die im Anspruch 13 angegebenen Merkmale gelöst. Hinsichtlich des Verfahrens zur Herstellung eines elektrischen Energiespeichers wird die Aufgabe erfindungsgemäß durch die im Anspruch 14 und hinsichtlich der Verwendung durch die im Anspruch 15 angegebenen Merkmale gelöst.

Vorteilhafte Ausgestaltungen der Erfindung sind Gegenstand der Unteransprüche.

Der erfindungsgemäße elektrische Energiespeicher umfasst ein Gehäuse, einen innerhalb des Gehäuses angeordneten elektrischen Speicherblock, eine Kühlstruktur und ein innerhalb des Gehäuses befindliches und in thermischem Kontakt mit dem Speicherblock stehendes erstes Kühlmedium. Dabei ist das erste Kühlmedium derart ausgebildet, dass ein Aggregatzustand des ersten Kühlmediums bei einer Wärmeaufnahme vom Speicherblock bei einer vorgegebenen Grenztemperatur von einer Flüssigphase in eine Gasphase wechselt, das gasförmige erste Kühlmedium zur Kühlstruktur strömt, das gasförmige erste Kühlmedium an der Kühlstruktur kondensiert und das flüssige erste Kühlmedium zur Wärmeaufnahme von der Kühlstruktur zum Speicherblock zurück strömt.

Aufgrund dieser Ausbildung des erfindungsgemäßen Energiespeichers wird nach der Art eines so genannten Thermosiphon-Prinzips ein geschlossener Kühlkreislauf für den Speicherblock innerhalb des Gehäuses gebildet, wobei die Strömung und Zirkulation des ersten Kühlmediums allein aus dem Wechsel zwischen den Aggregatzuständen resultiert und keine zusätzlichen, Energie verbrauchenden Komponenten, wie beispielsweise eine Kühlmedienpumpe, erforderlich sind. Somit eignet sich der Energiespeicher insbesondere für mobile Anwendungen mit begrenztem Energievorrat.

Auch wird eine besonders gleichmäßige Kühlung durch einen erzeugten kontinuierlichen Wärmestrom zwischen dem Speicherblock und der Kühlstruktur erreicht. Somit kann eine Lebensdauer des Speicherblocks signifikant erhöht werden.

Um ein Austreten des ersten Kühlmediums aus dem Gehäuse zu vermeiden, ist dieses gemäß einer möglichen Weiterbildung des Energiespeichers fluiddicht verschlossen.

Um eine besonders einfache Strömung des ersten Mediums zur Kühlstruktur und von dieser zurück zum Speicherblock ohne zusätzliche Pumpvorrichtungen zu erzielen, ist die Kühlstruktur gemäß einer vorteilhaften Weiterbildung oberhalb des Speicherblocks angeordnet. Somit steigt das Kühlmedium in seiner Gasphase auf, wird an der Kühlstruktur kondensiert und sinkt aufgrund der Schwerkraft in seiner Flüssigphase wieder zum Speicherblock ab.

Zur Erhöhung der Kühlleistung ist die Kühlstruktur in einer möglichen Ausgestaltung des Energiespeichers mit einem zweiten Kühlmedium beaufschlagt.

Hierbei ist das zweite Kühlmedium beispielsweise eine Flüssigkeit, mit welcher eine besonders hohe Kühlleistung erzielbar ist.

Alternativ ist das zweite Kühlmedium beispielsweise ein Gas, insbesondere Luft, mittels welchem die Wärmeabfuhr an der Kühlstruktur mit besonders geringem Material- und Kostenaufwand realisierbar ist. In Verbindung mit dem Thermosiphon-Prinzip wird der Arbeitsbereich der Gas- oder Luftkühlung signifikant vergrößert.

Eine mögliche Ausführung des Energiespeichers sieht vor, dass die Flüssigkeit Meerwasser ist. Dies ist insbesondere bei einer Verwendung des Energiespeichers zur Versorgung von elektrischen Verbrauchern in Wasserfahrzeugen, insbesondere Unterseebooten, von besonderem Vorteil, da das Meerwasser bei der Fahrt von Wasserfahrzeugen in großen Mengen zur Verfügung steht.

In einer weiteren möglichen Ausgestaltung ist die Flüssigkeit eine Kühlflüssigkeit eines Kühlkreislaufs eines beliebigen Fahrzeugs, d. h. Wasserfahrzeugs, Landfahrzeugs und/oder Luftfahrzeugs. Dadurch ist es in besonders vorteilhafter Weise möglich, die vom Energiespeicher erzeugte Abwärme beliebigen anderen Verwendungen in einem Fahrzeug, beispielsweise zur Vorwärmung einer Antriebseinheit und/oder eines Fahrzeuginnenraums, zuzuführen.

Gemäß einer Weiterbildung ist das erste Kühlmedium elektrisch nicht-leitfähig. Somit sind keine aufwändigen Abdichtungen und besonders aufwändigen elektrischen Isolierungen des Speicherblocks und elektrischer Verbindungselemente zur Vermeidung elektrischer Fehler, beispielsweise elektrischer Überschläge oder Kurzschlüsse, erforderlich.

In einer möglichen Ausgestaltung des Energiespeichers ist das erste Kühlmedium 1,1,2,2,3-Pentafluoropropan, welches auch als R245ca bezeichnet wird und bei 70°C einen Dampfdruck von ungefähr 4 bar aufweist, oder 1,1,1,3,3-Pentafluoropropan, welches auch als R245fa bezeichnet wird und bei 70°C einen Dampfdruck von ungefähr 6 bar aufweist. Diese Stoffe eignen sich besonders gut als erstes Kühlmedium, da die Dampfdrücke über den gesamten Temperaturbereich des Energiespeichers moderat sind und somit auch dünnwandige Gehäuse verwendet werden können.

In einer weiteren möglichen Ausgestaltung des Energiespeichers umfasst der Speicherblock eine Mehrzahl elektrisch parallel und/oder seriell verschalteter Speichereinheiten. Somit sind beliebige elektrische Spannungen und elektrische Leistungen vorgebbar.

Um eine besonders hohe Leistungsfähigkeit, eine geringe Wartungsintensität sowie ein hohes Speichervermögen des Energiespeichers zu realisieren, sind die Speichereinheiten in einer möglichen Weiterbildung jeweils als Lithium-Ionen-Einzelzelle oder als Superkondensator ausgebildet.

Insbesondere umfassen die Speichereinheiten Mittel für einen Druckausgleich, um den innerhalb des Gehäuses auftretenden Dampfdrücken standzuhalten. Hierzu weisen die Speichereinheiten beispielsweise offene und/oder dünnwandige Gehäuse auf.

In dem erfindungsgemäßen Verfahren zur Kühlung von elektrischen Energiespeichern wird ein innerhalb eines Gehäuses angeordneter elektrischer Speicherblock in unmittelbaren Kontakt mit einem innerhalb des Gehäuses befindlichen ersten Kühlmedium gebracht, wobei das erste Kühlmedium bei einer Wärmeaufnahme vom Speicherblock bei einer vorgegebenen Grenztemperatur von einer Flüssigphase in eine Gasphase überführt wird, das gasförmige erste Kühlmedium zu einer Kühlstruktur strömt, das gasförmige erste Kühlmedium an der Kühlstruktur kondensiert und das flüssige erste Kühlmedium zur Wärmeaufnahme von der Kühlstruktur zum Speicherblock absinkt.

Mittels des erfindungsgemäßen Verfahrens wird nach der Art eines so genannten Thermosiphon-Prinzips eine besonders gleichmäßige Kühlung mit einem kontinuierlichen Wärmestrom zwischen dem Speicherblock und der Kühlstruktur in einem geschlossenen Kühlkreislauf realisiert, wobei die Strömung und Zirkulation des ersten Kühlmediums allein aus dem Wechsel zwischen den Aggregatzuständen resultiert und keine zusätzlichen, Energie verbrauchenden Komponenten, wie beispielsweise eine Kühlmedienpumpe, erforderlich sind. Aufgrund der gleichmäßigen Kühlung werden insbesondere eine hohe Leistungsfähigkeit des Energiespeichers und eine hohe Lebensdauer desselben erreicht.

Zur Realisierung des Thermosiphon-Prinzips wird in dem erfindungsgemäßen Verfahren zur Herstellung eines elektrischen Energiespeichers das Gehäuse vor einem Befüllen mit dem ersten Kühlmedium evakuiert.

Anschließend wird das Gehäuse mit einem bestimmten Füllgrad mit dem ersten Kühlmedium befüllt, wobei sich das erste Kühlmedium insbesondere im Phasengleichgewicht befindet. Somit wird ein sich selbst steuerndes System erzeugt. Da sich das Kühlmedium im Phasengleichgewicht befindet, ergibt sich ein Arbeitsdruck, welcher vom Kühlmedium und dessen Temperatur abhängig ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden.

Dabei zeigen:
- FIG 1: schematisch eine Schnittdarstellung eines ersten Ausführungsbeispiels eines erfindungsgemäßen elektrischen Energiespeichers, und
- FIG 2: schematisch eine Schnittdarstellung eines zweiten Ausführungsbeispiels eines erfindungsgemäßen elektrischen Energiespeichers.

Einander entsprechende Teile sind in allen Figuren mit den gleichen Bezugszeichen versehen.

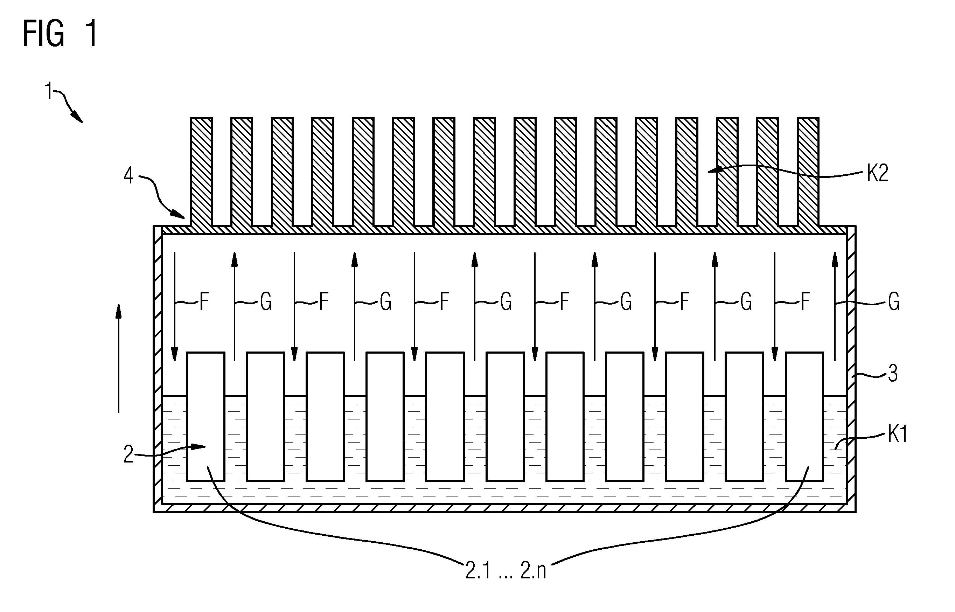

In FIG 1 ist in einer schematischen Schnittdarstellung ein mögliches erstes Ausführungsbeispiel eines erfindungsgemäßen elektrischen Energiespeichers 1 dargestellt.

Der Energiespeicher 1 umfasst einen Speicherblock 2, welcher eine Mehrzahl elektrisch parallel und/oder seriell verschalteter Speichereinheiten 2.1 bis 2.n aufweist. Die Speichereinheiten 2.1 bis 2.n sind dabei jeweils als Lithium-Ionen-Einzelzelle oder als Superkondensator ausgebildet.

Der Energiespeicher 1 ist insbesondere zur Versorgung elektrischer Verbraucher für mobile Anwendungen, insbesondere für ein Fahrzeug, vorgesehen. Beispielsweise ist das Fahrzeug als Wasserfahrzeug, insbesondere Unterseeboot, ausgebildet.

Auf derartigen Unterseebooten ist es bekannt, dass ein als Fahrbatterie bezeichneter Hauptenergiespeicher als Blei-Säure-Batterie ausgeführt ist. Deren Kühlung oder eine Kühlung eines Batterieraums im Unterseeboot wird mittels einer Luftströmung aus speziell dafür vorgesehenen Kühlanlagen, beispielsweise Klimaanlagen, realisiert. Da Blei-Säure-Batterien jedoch eine Wartung erfordern, ist ausschließlich eine solche Kühlung mit einer Luftströmung zweckmäßig. Besonders nachteilig hierbei ist eine aktive Ausführung des Kühlsystems, welches mehrere elektrisch betriebene Umwälzpumpen, Lüfter und andere elektrische Verbraucher umfasst, die aufgrund ihres Energiebedarfs eine Reichweite des Unterseebootes verringern.

Die aus Lithium-Ionen-Einzelzellen oder Superkondensatoren gebildeten Speichereinheiten 2.1 bis 2.n sind jedoch wartungsfrei ausgebildet. Somit ist eine gekapselte Kühlung der Speichereinheiten 2.1 bis 2.n, das heißt ein in sich geschlossener Kühlkreislauf, verwendbar.

Um eine effiziente und gleichmäßige Kühlung der Speichereinheiten 2.1 bis 2.n zu realisieren, wird die Kühlung der Speichereinheiten 2.1 bis 2.n mittels des so genannten Thermosiphon-Prinzips durchgeführt.

Hierbei wird in ein Gehäuse 3 des Energiespeichers 1, welches als dauervakuumdichtes Druckgehäuse ausgebildet ist, mit einem bestimmten Füllgrad mit einem elektrisch nichtleitfähigen ersten Kühlmedium K1 befüllt, wobei sich das erste Kühlmedium K1 im Phasengleichgewicht befindet. Vor der Befüllung wird das Gehäuse 3 evakuiert. Nach der Befüllung wird das Gehäuse 3 fluiddicht und dauervakuumdruckdicht verschlossen.

Während des Betriebs des Energiespeichers 1 wird Verlustwärme von den Speichereinheiten 2.1 bis 2.n des Speicherblocks 2 an das erste Kühlmedium K1 abgegeben. Zur Realisierung des Thermosiphon-Prinzips ist das erste Kühlmedium K1 derart ausgebildet, dass ein Aggregatzustand desselben bei der Wärmeaufnahme vom Speicherblock 2 bei einer vorgegebenen Grenztemperatur von einer Flüssigphase in eine Gasphase überführt wird.

Anschließend strömt das gasförmige erste Kühlmedium K1, dargestellt durch die Pfeile G, zu einer oberhalb des Speicherblocks 2 angeordneten Kühlstruktur 4 an welcher dieses kondensiert und aufgrund der Schwerkraft im flüssigen Aggregatzustand, dargestellt durch die Pfeile F, zur erneuten Wärmeaufnahme von der Kühlstruktur 4 zum Speicherblock 2 zurück strömt.

Die Kühlstruktur 4 ist im dargestellten Ausführungsbeispiel als Kühlkörper mit einer strukturierten Oberfläche zur Oberflächenvergrößerung und zur Luftkühlung ausgebildet. Aufgrund des verwendeten Thermosiphon-Prinzips ergeben sich in besonders vorteilhafter Weise effektiv höhere Oberflächen bei der Wärmeübertragung, wodurch ein erforderlicher Temperaturunterschied zur Luft als zweites Kühlmedium K2 für die Kühlung reduziert wird und somit der Einsatzbereich der Luftkühlung vergrößert wird.

Als erstes Kühlmedium K1 eignet sich beispielsweise 1,1,2,2,3-Pentafluoropropan, welches bei 70°C einen Dampfdruck von ca. 4 bar aufweist. Auch ist 1,1,1,3,3-Pentafluoropropan besonders geeignet, welches bei 70°C einen Dampfdruck von ca. 6 bar aufweist. Diese relativ geringen Drücke ermöglichen auch die Verwendung von dünnwandigen Gehäusen 3. Zum Ausgleich der Drücke weisen die Speichereinheiten 2.1 bis 2.n in nicht dargestellter Weise Mittel zum Druckausgleich auf, wobei diese Mittel beispielsweise durch offene und/oder dünnwandige Gehäuse 3 der Speichereinheiten 2.1 bis 2.n gebildet sind. Das erste Kühlmedium K1 kann jedoch alternativ auch aus anderen Substanzen mit anderen Arbeitsdrücken gebildet sein.

Die mittels des Thermosiphon-Prinzips realisierte gleichmäßige Kühlung der Speichereinheiten 2.1 bis 2.n sowie die Kühlung der Kühlstruktur 4 erfolgen dabei passiv, was insbesondere bei einer Anwendung des Energiespeichers 1 in mobilen Anwendungen mit begrenztem Energievorrat vorteilhaft ist und die Energiebilanz signifikant verbessert.

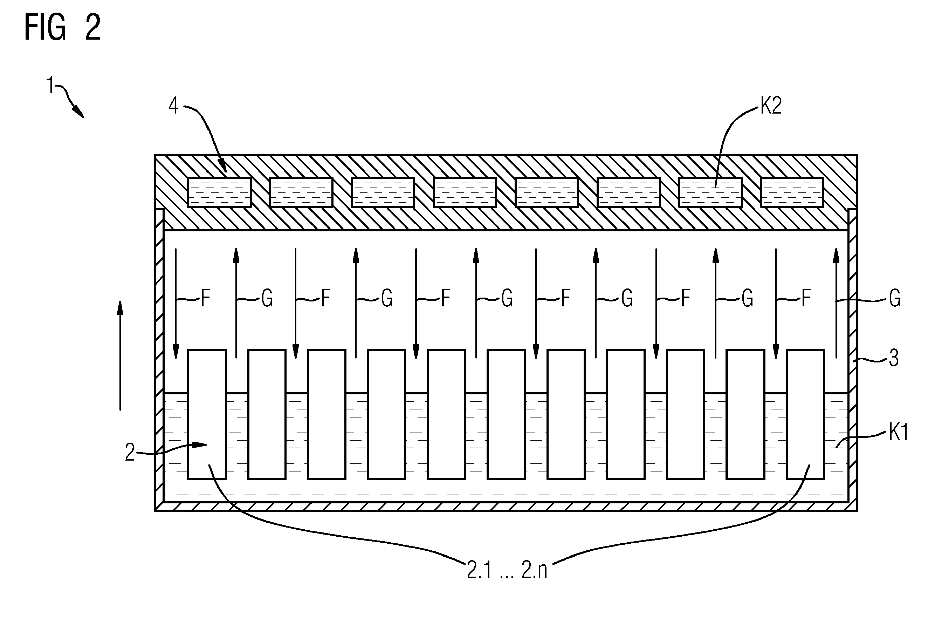

FIG 2 zeigt in einer schematischen Schnittdarstellung ein mögliches zweites Ausführungsbeispiel des erfindungsgemäßen elektrischen Energiespeichers 1.

Im Unterschied zu dem in FIG 1 dargestellten ersten Ausführungsbeispiel ist das zweite Kühlmedium K2 als Flüssigkeit ausgebildet, welche die als Kühlplatte mit Kühlkanälen ausgebildete Kühlstruktur 4 durchströmt.

Insbesondere bei einer Verwendung des Energiespeichers 1 in Wasserfahrzeugen, beispielsweise Unterseebooten, ist die verwendete Flüssigkeit Meerwasser, welche während der Fahrt durch die Strömung ohne zusätzliche Pumpe durch die Kühlstruktur 4 geleitet werden kann.

Somit ergibt sich eine hohe Kühlleistung, wobei aufgrund der Verwendung des Thermosiphon-Prinzips die Gleichmäßigkeit der Kühlung sichergestellt ist.

Auch ist es möglich, als Flüssigkeit eine Kühlflüssigkeit eines beliebigen Kühlkreislaufs eines Fahrzeugs zu verwenden, wobei die vom Energiespeicher 1 erzeugte Abwärme beliebigen anderen Verwendungen in einem Fahrzeug, beispielsweise zur Vorwärmung einer Antriebseinheit und/oder eines Fahrzeuginnenraums, zugeführt werden kann.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrischer Energiespeicher (1), umfassend
- ein Gehäuse (3),
- einen innerhalb des Gehäuses (3) angeordneten elektrischen Speicherblock (2),
- eine Kühlstruktur (4) und
- ein innerhalb des Gehäuses (3) befindliches und in thermischem Kontakt mit dem Speicherblock (2) stehendes erstes Kühlmedium (K1),
- wobei das erste Kühlmedium (K1) derart ausgebildet ist, dass
- ein Aggregatzustand des ersten Kühlmediums (K1) bei einer Wärmeaufnahme vom Speicherblock (2) bei einer vorgegebenen Grenztemperatur von einer Flüssigphase in eine Gasphase wechselt,
- das gasförmige erste Kühlmedium (K1) zur Kühlstruktur (4) strömt,
- das gasförmige erste Kühlmedium (K1) an der Kühlstruktur (4) kondensiert und
- das flüssige erste Kühlmedium (K1) zur Wärmeaufnahme von der Kühlstruktur (4) zum Speicherblock (2) zurück strömt.

2. Elektrischer Energiespeicher (1) nach Anspruch 1, **dadurch gekennzeichnet, dass** das Gehäuse (3) fluiddicht verschlossen ist.

3. Elektrischer Energiespeicher (1) nach Anspruch 1 oder 2, **dadurch gekennzeichnet, dass** die Kühlstruktur (4) oberhalb des Speicherblocks (2) angeordnet ist.

4. Elektrischer Energiespeicher (1) nach einem der vorhergehenden Ansprüche,
**dadurch gekennzeichnet, dass** die Kühlstruktur (4) mit einem zweiten Kühlmedium (K2) beaufschlagt ist.

5. Elektrischer Energiespeicher (1) nach Anspruch 4, **dadurch gekennzeichnet, dass** das zweite Kühlmedium (K2) eine Flüssigkeit oder ein Gas ist.

6. Elektrischer Energiespeicher (1) nach Anspruch 5, **dadurch gekennzeichnet, dass** die Flüssigkeit Meerwasser ist.

7. Elektrischer Energiespeicher (1) nach Anspruch 5, **dadurch gekennzeichnet, dass** die Flüssigkeit eine Kühlflüssigkeit eines Kühlkreislaufs eines Fahrzeugs ist.

8. Elektrischer Energiespeicher (1) nach einem der vorhergehenden Ansprüche,
**dadurch gekennzeichnet, dass** das erste Kühlmedium (K1) elektrisch nicht-leitfähig ist.

9. Elektrischer Energiespeicher (1) nach einem der vorhergehenden Ansprüche,
**dadurch gekennzeichnet, dass** das erste Kühlmedium (K1) 1,1,2,2,3-Pentafluoropropan oder 1,1,1,3,3-Pentafluoropropan ist.

10. Elektrischer Energiespeicher (1) nach einem der vorhergehenden Ansprüche,
**dadurch gekennzeichnet, dass** der Speicherblock (2) eine Mehrzahl elektrisch parallel und/oder seriell verschalteter Speichereinheiten (2.1 bis 2.n) umfasst.

11. Elektrischer Energiespeicher (1) nach Anspruch 10, **dadurch gekennzeichnet, dass** die Speichereinheiten (2.1 bis 2.n) jeweils als Lithium-Ionen-Einzelzelle oder als Superkondensator ausgebildet sind.

12. Elektrischer Energiespeicher (1) nach Anspruch 10 oder 11,
**dadurch gekennzeichnet, dass** die Speichereinheiten (2.1 bis 2.n) Mittel für einen Druckausgleich umfassen.

13. Verfahren zur Kühlung von elektrischen Energiespeichern (1), wobei ein innerhalb eines Gehäuses (3) angeordneter elektrischer Speicherblock (2) in unmittelbaren Kontakt mit einem innerhalb des Gehäuses befindlichen ersten Kühlmedium (K1) gebracht wird, wobei
- das erste Kühlmedium (K1) bei einer Wärmeaufnahme vom Speicherblock (2) bei einer vorgegebenen Grenztemperatur von einer Flüssigphase in eine Gasphase überführt wird,
- das gasförmige erste Kühlmedium (K1) zu einer Kühlstruktur (4) strömt,
- das gasförmige erste Kühlmedium (K1) an der Kühlstruktur (4) kondensiert und
- das flüssige erste Kühlmedium (K1) zur Wärmeaufnahme von der Kühlstruktur (4) zum Speicherblock (2) absinkt.

14. Verfahren zur Herstellung eines elektrischen Energiespeichers (1) nach einem der Ansprüche 1 bis 11, wobei das Gehäuse (3) vor einem Befüllen mit dem ersten Kühlmedium (K1) evakuiert wird.

15. Verwendung eines elektrischen Energiespeichers (1) nach einem der Ansprüche 1 bis 12 zur Versorgung von elektrischen Verbrauchern in Wasserfahrzeugen, insbesondere Unterseebooten.
